# EUROPEAN PATENT APPLICATION

(11) **EP 0 831 299 A1**
(43) Date of publication of application: **25.03.1998**
(21) Application number: 96906950.9
(22) Date of filing: 26.03.1996
(51) Int. Cl.: G01B 11/30, E21B 47/00

(54) **DEVICE FOR OBSERVING INNER WALL SURFACE OF CONDUIT**

(30) Priority: 27.03.1995 JP 93065/95
(71) Applicant: TOA GROUT KOGYO CO., LTD., Tokyo 135 (JP); CORE CORP., Tokyo 108 (JP)
(72) Inventor: OOKA, Shinkichi, Koto-ku, Tokyo 135 (JP); SANO, Sakae, Koto-ku, Tokyo 135 (JP); MATSUMOTO, Yoshitaka, Minato-ku, Tokyo 108 (JP); MURAKAMI, Osamu, Minato-ku, Tokyo 108 (JP)
(74) Representative: Skone James, Robert Edmund
(86) International application number: JP9600782
(87) International publication number: WO9630719

(57) **Abstract**

A device for wholly and continuously observing inner wall surfaces, which are dark and difficult to observe, of a conduit, such as a water pipe, or a sewage pipe which runs vertically, horizontally, obliquely and meanderingly under the ground, with an accurate position measurement. A scanner is put into a conduit, and a travelling section of a moving device is driven under the instruction from a control device to move the scanner along the axis of the conduit. A distance sensor measures the distance of movement of the scanner based on the length of a cable paid out, and a posture sensor having a three-axis gyroscope measures the posture of the scanner using the roll angle, pitch angle and yaw angle. These distance data and posture data which vary with movement of the scanner are sequentially transmitted to the control device on the ground through the cable, and combined with the picture data outputted from the scanner to generate continuous developed picture of inner wall surface of the conduit.

## Description

### Background of the Invention:

Pipes buried in the ground such as sewage ducts are Hume tubes, ceramic tubes or cast iron tubes. When these tubes are used for an extended period, it is liable that their inner walls are attacked by corrosive gases or substances or by liquids flowing therein so that the thickness of inner walls is reduced by corrosion, and accordingly their strength is reduced. Also, the land sinking or the land pressure may cause tube joints to be dislocated, and the increasing of the load on the underground duct may cause partial deformation or appearance of cracks, thereby allowing underground water to invade in the duct, or otherwise allowing water or liquid to leak from the duct which carries the water or liquid in the ground.

Therefore, it is necessary to observe the inner wall surface of the duct, looking for such defects if any, in the duct with an appropriate tool if no entrance in the duct is permitted. In this case it is necessary to effect an overall, continuous observation of the inside wall of the duct.

Such an observation tool is a TV camera, which is appropriate for observing continuously the whole surface of the inner wall of the duct. Specifically a TV camera is inserted in the duct, and it is made to run by using an associated remote control or by pulling the wire attached to the camera while observing the whole surface of the inner wall of the duct by an associated monitor. The image taken by the camera is recorded in a video recorder, and will be reproduced later for determining the condition of damage caused by crush, crack or depression in the duct.

Another example of tool for observing continuously the whole surface of the inner wall of a duct is a bore scanner, which can be suspended by a strong wire in a deep longitudinal hole bored in the ground to be rotated 360 degrees around, thereby providing images of the whole circumference of the inner wall of the duct for display (see Japanese Patent Application Laid-Open No.60-54647). This observation tool, however, is unstable in posture owing to suspensuion by an elongated wire, and accrdingly the projected light falls in the tool in indefinite directions, and the movement of the tool is limited only to the longitudinal direction. To obtain a series connection of pictures of the whole inner wall surface of the longitudinal bore a single-turn scanning is effected by a 360-degree rotation of the light acceptor of the scanner, which rotation is started every time the scanner is directed to a given fixed direction such as "N" pole at a selected level, and taking a picture of the complete circumference of bore surface at the selected level in the longitudinal hole in the ground, and this is repeated at every subsequent descendent increment to record the picture taken at the level. Finally those single-turn pictures are arranged relative to the given fixed direction in the subsequent order.

As for observation by a TV camera it is likely that some defects are overlooked because of insufficient amount of light in the duct. To obtain good observation results, therefore, some skilfulness is required.

In case of ducts extending in a curve a required observation is difficult with recourse of TV cameras. The bending of the duct can be located from a mass of underground water if detected in the duct.

It is required that the degree of damage, the distance of damage along the duct, the shape and size of damage and other defective factors are determined, but these pieces of defect information are hardly detectable to TV cameras.

As for observation by a bore scanner water supply ducts or sewage ducts are laid horizontally rather than vertically in the ground, and such ducts are often inclined or curved in the ground. In operation the scanner must be held to be in alignment with the center axis of the duct, and the 360-degree scanning and picture-taking must be made while continuously determining the instantaneous position and posture of the scanner, which moves in the longitudinal, lateral and oblique directions in the three-dimensional space.

One object of the present invention is to provide a tool which is capable of continuously observing the whole surface of a duct such as a water supply or sewage duct laid in longitudinal, lateral and oblique directions in the ground, permitting a good observation even though a least amount of surrounding light available in the duct and providing exact measurement of instantaneous position.

### Disclosure of the Invention:

An apparatus for observing the surface of the inner wall of a duct according to the present invention is constructed as follows:
it comprises: a scanner responsive to the reflection of the projected light from the whole surface of the inner wall of the duct for making an optoelectrical conversion to provide image data; means for holding and moving the scanner along the center axis of the duct; means for determining the travelling distance of the scanner and for providing distance data; means for determining the instantaneous posture of the scanner and for providing posture data representing the inclination of the scanner relative to three axies; mean for rearranging the image data, the distance data and the posture data in synchroneous relation and recording these data; means for arranging the image data sequentially with their starting points aligned, thereby providing a continuous development of images of the surface of the inner wall of the duct; and means for producing a three-dimensional trace of the scanner from the distance data and the posture data.

The scanner moving means can move the scanner along the center axis of the duct.

The distance measuring means can determine the travelling distance of the scanner to provide distance data.

The posture sensor can determine the instantaneous posture of the scanner to provide posture data representing the inclination of the scanner relative to three predetermined axes.

The recorder means can record image data, distance data and posture data in synchroneous relation.

The image continuous-development means can arrange the image data sequentially with their starting points aligned, thereby providing a continuous development of images of the surface of the inner wall of the duct.

The image producing means can produce a three-dimensional trace of the scanner from the distance data and the posture data.

### Brief Description of the Drawings:

Fig.1 is a sectional view showing how a duct inspecting tool according to one embodiment of the present invention works;
Fig.2 is a scanner incorporated in the duct inspecting tool according to the embodiment of the present invention;
Fig.3 is a graphic representation of the flat development of the inner wall of the duct;
Fig.4 is a cylindrical projection of the inner wall of the duct;
Fig.5 shows one example of a curved duct;
Fig.6 shows one example of an inclined duct;
Fig.7 illustrates how a duct inspecting tool according to another embodiment of the present invention can be used; and
Fig.8 shows one example of branched duct laid in the ground.

### Best Mode of Carrying Out the Invention:

A preferred embodiment of the present invention is described below with reference to accompanying drawings.

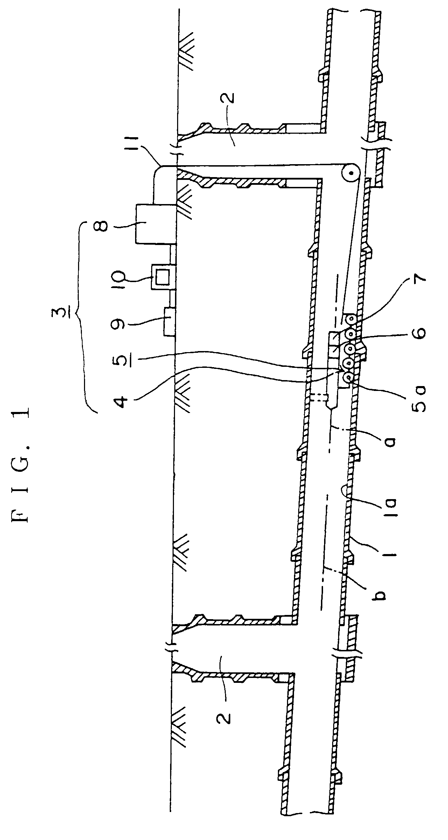

Referring to Fig. 1, a sewage duct 1 is laid in the ground, communicating with two manholes 2. An apparatus 3 for observing the surface 1a of the inner wall of a duct comprises a scanner 4, a scanner driver 5 for holding and moving the scanner in the duct, a distance measuring unit 6 attached to the scanner driver 5 for determining the travelling distance of the scanner 4, a posture determining sensor 7 attached to the scanner driver 5 for determining the instantaneous posture of the scanner 4 in three different axes, a controller 8 for controlling the scanner 4 and for processing observation data, a recorder 9 for recording observation data and a monitoring display 10 for showing observation data. The scanner 4 and the scanner driver 5 are connected to the controller 8 on the ground via an associated cable 11.

The scanner driver 5 has a driving unit 5a working under the control of the controller 8, thereby holding the scanner 4 all the time with its center axis aligned with the center axis "b" of the duct 1.

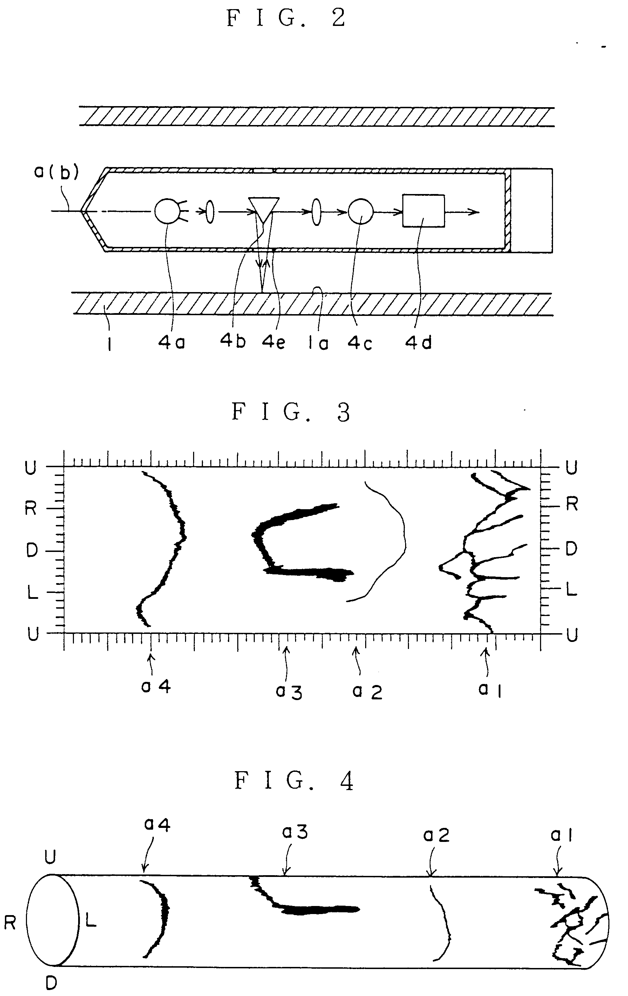

Fig.2 shows diagrammatically the scanner 4. It has a light source 4a, a reflector mirror 4b, an optical-electric converter 4c and a data transfer unit 4d arranged in the order named in its cylindrical casing. The cylindrical casing has a window 4e confronting the reflector 4b.

When making a required observation of the surface 1a of the inner wall of a duct 1, the scanner 4 carried by the driver 5 is put in the duct 1, and then, the driving unit 5a of the driver 5 is put in operation, thus moving the scanner 4 along the center axis "b" of the duct 1 while rotating the reflector mirror 4b under the control of the controller 8.

A beam of light is thrown from the light source 4a to be reflected by the rotating reflector mirror 4b, and the beam of light thus reflected passes through the window 4e to scan the whole circumference of the inner wall 1a of the duct 1. The beam of light is reflected from the inner wall 1a of the duct 1 to the rotating reflector mirror 4b. The beam of light carrying pieces of information representing fractures, cracks, depressions or any other defective conditions is converted to electric signal by the opto-electric converter 4c. The so converted electric signal is converted, in turn, to digital signal by the data transfer unit 4d, which digital signal is directed to the controller 8 on the ground via the cable 11.

The distance measuring unit 6 determines the travelling distance of the scanner 4 in terms of the feeding length of the cable 11. The posture determining sensor 7 uses a gyroscope to determine the instantaneous posture of the scanner 4 in terms of roll, pitch and yaw angles. As the scanner 4 moves in the duct 1, the distance and posture variables are sent to the controller 8 on the ground via the cable 11. Then, the distance and posture variables along with the video data are put in synchroneous relation to be recorded in the recorder 9.

The controller 8 produces a sequence of images of the inner wall surface 1a of the duct 1 from the distance, posture and video data.

The roll angle of the posture data (the angular rotation of the scanner 4 about its axis) represents where the instantanous video data is obtained by the scanner 4; there is a fear of allowing the picture starting position to be shifted because the scanner 4 happens to rotate by itself.

The roll angle indicates where the picture starting point is, and therefore, subsequent video data can be rearranged sequentially with the picture starting point of each video data aligned to produce a sequential combination of images of the inner wall surface 1a of the duct 1.

The sequential development of images of the inner wall surface 1a thus produced by the controller 8 are shown as in Fig.3 or 4.
Specifically Fig.3 is a graphic representation of the flat development of the inner wall surface 1a of the duct 1 in plane, showing complicated fracture a1, fine linear crack a2, broad crack a3 and depression a4. Fig.4 is a cylindrical projection of the same inner wall surface 1a as Fig.3.

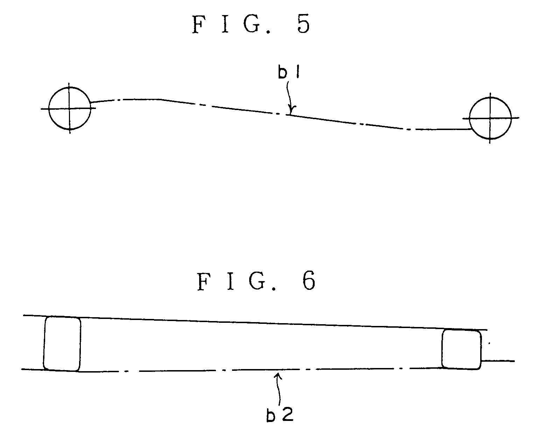

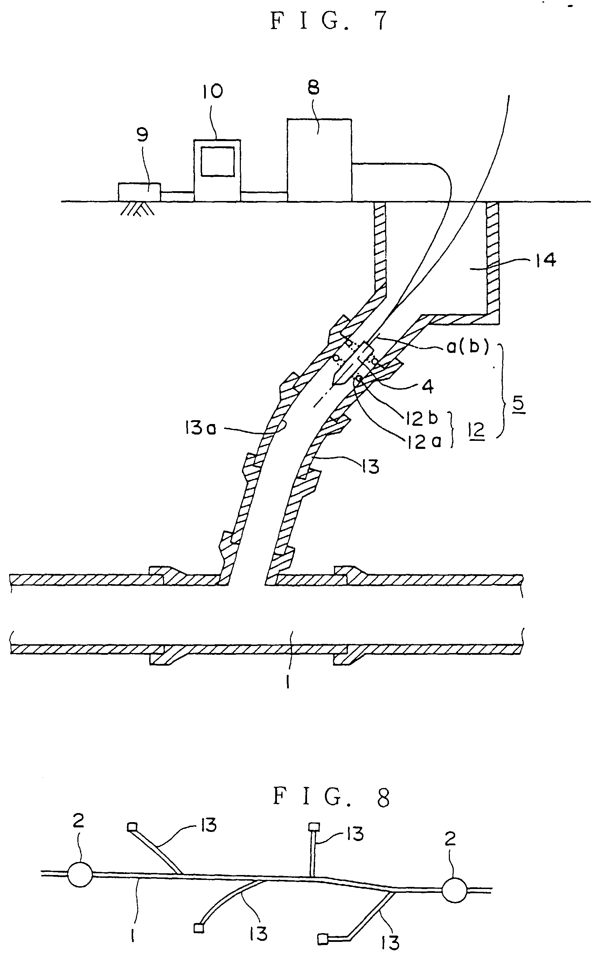

The travelling trace of the scanner 4 can be obtained from the travelling distance and posture data of the scanner 4. Specifically the position of the scanner 4 per unit distance can be obtained by integrating the increment each of the roll, pitch and yaw angles at each unit distance, and the travelling trace of the scanner 4 can be obtained by integrating the incremental positions thus obtained. The curved or inclined duct shape (see Fig.5 or 6) can be produced and displayed from the travelling trace of the scanner 4. The duct pattern in the ground can be displayed as shown in Fig. 8, comprising a duct 1 such as a sewage duct, manholes 2 and branch tubes 13 as later described.

The duct inspecting tool 5 described above is of self-driving or automotive type, and is apprpriate for use in a gentle-sloped duct or a large-diameter duct. A duct inspecting tool of cable-pulling type is apprpriate for use in a steep-sloped duct or a small-diameter duct. Referring to Fig.7, such a duct inspecting tool 5 is shown as being inserted in the branch tube 13 extending from a sewage duct 1 to a square box 14, which opens on the ground.

The driver 5 has spring legs 12 extending radially from the scanner 4. Each spring leg 12 comprises a spring 12a and a roll 12b fixed to the end of the spring 12a. These spring legs 12 hold the scanner 4 with its center axis "a" aligned with the center axis "b". The so constructed driver 5 can carry the scanner 4 in the steep-sloped branch 13 without slipping.

### Possibility of Industrial Utilization:

The scanner is held to be on the center line of the duct all the time while moving laterally, longitudinally and obliquly in a three-dimensional space in the ground, and a 360-degree round image of the inner wall surface of a duct is produced for display while the instantanous position and posture of the scanner are continuously measured.

The duct inspecting tool according to the present invention can travel in a curved or sloped water supply or sewage duct in the ground, taking pictures sequentially in dark, and at the same time, measuring the instantaneous position. The continuous, whole observation in the duct reveals effectively how and where the underground water invades in the duct, too.

## Claims

1. An apparatus for observing the surface of the inner wall of a duct comprises: a scanner responsive to the reflection of the projected light from the whole surface of the inner wall of the duct for making an optoelectrical conversion to provide image data; means for holding and moving the scanner along the center axis of the duct; means for determining the travelling distance of the scanner and for providing distance data; means for determining the instantaneous posture of the scanner and for providing posture data representing the inclination of the scanner relative to three axies; means for rearranging the image data, the distance data and the posture data in synchroneous relation and recording these data; means for arranging the image data sequentially with their starting points aligned, thereby providing a continuous development of images of the surface of the inner wall of the duct; and means for producing a three-dimensional trace of the scanner from the distance data and the posture data.
